# EUROPEAN PATENT SPECIFICATION

(11) **EP 1 502 855 B1**
(45) Date of publication and mention of the grant of the patent: **09.04.2008**
(21) Application number: 03425529.9
(22) Date of filing: 01.08.2003
(51) Int. Cl.: B65B 11/02, B65B 11/04

(54) **Device for stretching in the transverse direction a plastic film in machines for wrapping palletized loads**
Vorrichtung zum Querstrecken einer Kunststofffolie in Maschinen zum Umwickeln von palettisierten Ladungen
Dispositif pour étirer transversalement un film en matière plastique dans des machines d'emballage de charges palettisées

(43) Date of publication of application: 02.02.2005
(73) Proprietor: Mecwrap S.r.l., 47023 Villa Calabra di Cesena (FC) (IT)
(72) Inventor: Casadei, Claudio, Cesena (FC) (IT)
(74) Representative: Provvisionato, Paolo

(56) References cited:
- EP-A- 0 440 355
- EP-A- 0 479 264
- US-A- 5 195 296
- US-B1- 6 311 459

## Description

In the sector relating to the wrapping of palletized loads, the type of machine used for supplying the plastic film to be wound onto the pallet is mainly determined by the working conditions to which the machine is subject and by the type and dimensions of the load to be wrapped: the types of machine most frequently used are: of the rotating arm or ring type, in which the load remains stationary and a component of the machine rotates about the latter, unwinding the film; of the rotating-table type, in which the load is positioned on a platform rotating with respect to the film supplying device which remains stationary; of the carriage type, in which an operator drives a carriage, provided with the film supplying device, about the stationary load.

In all these situations, a reel of plastic film to be supplied moves vertically so as to gradually envelop the entire stack of containers to be wrapped. In accordance with the teaching of various patents filed between the years '70 and '80, and therefore already expired, it very often happens that the plastic film is pre-stretched, upon supplying, in the horizontal direction, causing it to pass, before being extended on the pallet, through two rollers which rotate at different speeds (the second roller rotating faster than the first roller).

This results in stretching of the film up to as much as 150% of its original length and therefore use of a smaller amount of film, taking advantage of its elastic return effect in order to ensure better adhesion thereof to the surface of the pallet.

However, among the essential parameters for assessing the efficiency of this type of machine, the pallet winding time is not influenced by this albeit useful and important operation: it is in fact determined by the relative speed of rotation of the reel with respect to the pallet, the dimensions of the load to be wrapped and the height of the plastic film.

Once the dimensions of the load have been established, in order to maintain safe conditions, the relative speed of load and pallet is subject to limit values, so that the only parameter which could be modified in order to speed up the production cycle would be the height of the plastic film.

The dimensions of the film, however, are also standardised and in any case modification thereof would in any case result in a greater consumption of material.

EP 0479264 describes a device in accordance with the preamble of claim 1, which is capable of eliminating the abovementioned drawbacks.

This is achieved by means of a device which allows the film to be stretched in the vertical direction.

The main advantage obtained by means of said apparatus consists essentially in the fact that the production rate of the whole machine is substantially increased owing to the reduction in the time necessary for wrapping the individual pallet following a reduction in the number of revolutions required for the operation.

Moreover, the quantity of plastic film used is reduced by about 20% with a consequent not insignificant saving in terms of costs.

Finally, stretching of the film in the vertical direction results in a lined effect on the surface of the film which provides the entire package with a more attractive aesthetic appearance.

US 6311459 document describes a device and method for lording film on machines for wrapping products provided with two pre-stretch rollers which are used to longitudinally pre-stretch the film before wrapping the products.

The rollers have separate reels with an empty space there between for guiding the film between the rollers. The object of the present invention is therefore that of eliminating drawbacks of the abovementioned prior art.

The invention provides a device as defined in claim 1.

Further advantages and characteristic features of the invention will emerge more clearly from the following detailed description provided with reference to the accompanying drawings which show a non-limiting example of embodiment thereof, where:
- Figure 1 shows the invention in the working condition, with some parts removed so that other parts may be seen more clearly;

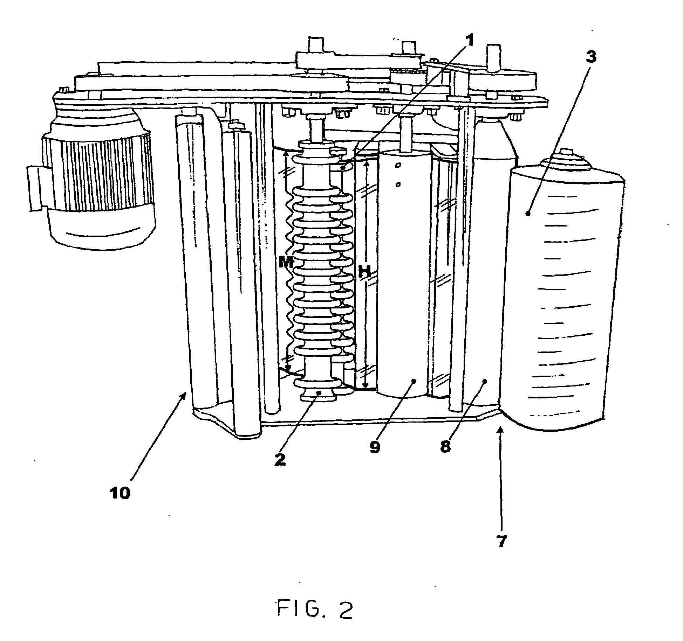

- Figure 2 shows a front end view of the invention;
- Figure 3 shows a rear end view of the invention.

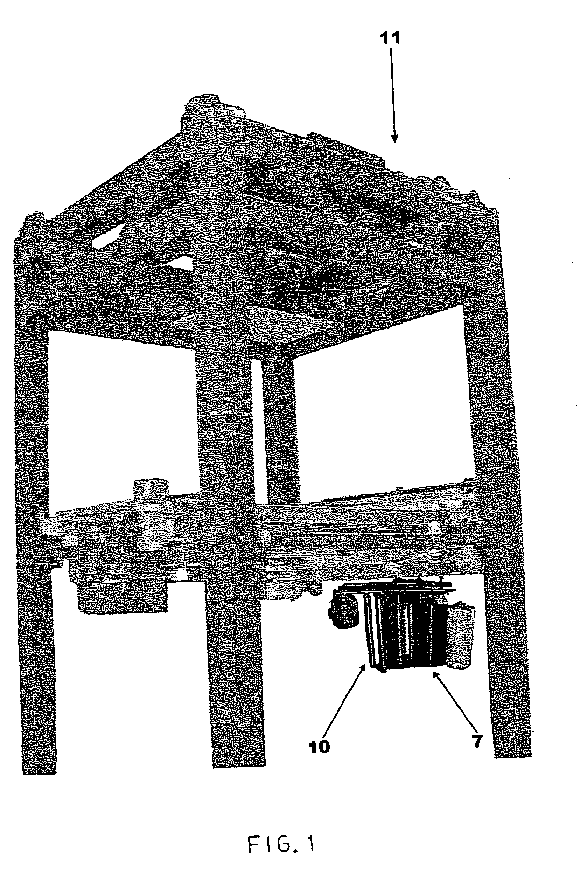

As can be seen from the figures, the invention relates to a device for stretching a plastic film in the vertical direction in machines for wrapping palletized loads. In Figure 1, the device (10) has been mounted on a rotating-ring machine (11), but could be used in an identical manner on wrapping machines of another type, while retaining the same characteristics and providing the same advantages.

It comprises at least two rollers (1,2) arranged in series and suitably close to each other, with surfaces (1a,2a) shaped in a complementary manner so as to stress-relieve the plastic film (3) by causing it to pass through a section having a measure (M) greater than the height (H) of said film (3); downstream of the rollers (1,2), the device (10) comprises stretching means (4) having an extension (S) greater than the height (H) of the film (3) and suitable for making deformation of the film (3) permanent when the film (3) passes over them.

The stretching means comprise a curved drawing arch (4) which is able to favour extension of the stress-relieved film (3) so that the latter reaches a height (H') greater than that originally possessed.

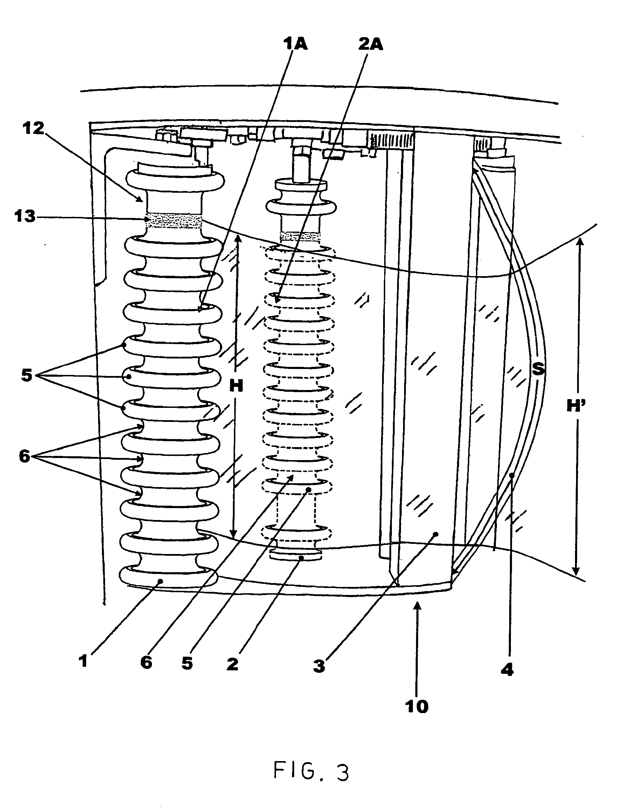

The surfaces (1a,2a) of the rollers (1,2) comprise alternating crests (5) and grooves (6) so as to define a travel path of the film (3) which is not linear in the vertical direction. As can be seen in Figure 3, the crests (5) of a roller (1) face the grooves (6) of the other roller (2) and vice versa: in this way, the measure (M) of the section through which the film (3) passes is defined by the length of the broken zigzag line which joins the crests (5) and grooves (6) of the two rollers (1,2).

Obviously, the device (10) may comprise a plurality of rollers (1,2) able to divide up stress-relieving of the film (3) into several stages.

In order to maximise the advantages resulting from use of this device (10) in a machine (11) for wrapping palletized loads, it is convenient to associate with it an apparatus (7) for stretching the plastic film (3) in a horizontal direction. In accordance with the known art in the sector, this apparatus (7) comprises at least two rollers (8,9), the second roller (9) of which rotates more rapidly than the first roller (8) so as to stretch the film (3) in the horizontal direction.

In order to limit the possibility of jamming and therefore make the working cycle of the machine (11) as rapid as possible, the rollers (1,2) comprise a shaped surface portion (12) so as to facilitate correct insertion of the plastic film (3).

The surface portion (12) comprises a circumferential recess (13) able to act as a receiving surface for insertion of the film (3).

## Claims

1. Device for stretching in the vertical direction a plastic film in machines for wrapping palletized loads, comprising in series at least two rollers (1,2) with surfaces (1a,2a) shaped in a complementary manner and able to stress-relief the plastic film (3) by causing it to pass through a section having measure (M) greater than its height (H), and stretching means (4) having an extension (S) greater than the height (H) of the film (3) and able to make deformation of the film (3) permanent when the film (3) passes over said stretching means (4),and comprising an apparatus (7) for stretching the plastic film (3) in the horizontal direction, wherein said apparatus (7) comprises at least two rollers (8,9), the second roller (9) of which rotates at a faster speed than the first roller (8) so as to stretch the film (3) in the horizontal direction, the device being **characterized in that** the rollers (1,2) having surfaces (1a,2a) shaped in a complementary manner comprise a generally cylindrically shaped recessed surface portion (12), said recessed surface portion (12) comprising a circumferential recess (13) able to act as a receiving surface for insertion of the plastic film (3) between said rollers (1,2).

2. Device according to Claim 1, **characterized in that** said stretching means comprise a curved drawing arch (4) able to favour extension of the stress-relieved film (3) so that it assumes a greater height (H').

3. Device according to Claim 1, **characterized in that** the surfaces (1a,2a) of the rollers (1,2) comprise alternating crests (5) and grooves (6) so as to define a travel path of the film (3) which is not linear in the vertical direction.

4. Device according to Claim 3, **characterized in that** the crests (5) of one roller (1) face the grooves (6) of the other roller (2), and vice versa.

5. Device according to Claim 1, **characterized in that** it comprises a plurality of rollers (1,2) able to divide up stress-relieving of the film (3) into several stages.

## Patentansprüche

1. Eine Vorrichtung, um eine Kunststofffolie in vertikaler Richtung zu spannen, bei Maschinen zur Umwicklung palettierter Lasten, umfassend in Serien mindestens zwei Rollen (1, 2) mit Oberflächen (1a, 2a), die komplementär geformt sind und dazu imstande sind, die Spannung auf die Kunststofffolie (3) zu entlasten, indem sie durch einen Abschnitt führen, dessen Maß (M) größer als seine Höhe (H) ist, sowie Spannmittel (4), die eine Ausdehnung (S) haben, die größer ist als die Höhe (H) der Folie (3), und dazu imstande sind, dafür zu sorgen, dass die Verformung der Folie (3) bleibend wird, wenn die Folie (3) über die besagten Spannmittel (4) läuft, und umfassend einen Apparat (7) zum Spannen der Kunststofffolie (3) in horizontaler Richtung, wobei der besagte Apparat (7) mindestens zwei Rollen (8, 9) umfasst, von denen sich die zweite Rolle (9) mit einer größeren Geschwindigkeit dreht als die erste Rolle (8), sodass die Folie (3) in der horizontalen Richtung gespannt wird; die Vorrichtung ist **dadurch gekennzeichnet, dass** die Rollen (1, 2), deren Oberflächen (1a, 2a) komplementäre Formen haben, einen im Wesentlichen zylinderförmigen Anteil der Oberfläche haben, der vertieft ist (12); der besagte vertiefte Oberflächenanteil (12) umfasst um den gesamten Umfang eine Vertiefung (13), die dazu imstande ist, als Oberfläche zur Entgegennahme der Kunststofffolie (3) beim Einsetzen zwischen die besagten Rollen (1, 2) zu wirken.

2. Die Vorrichtung nach Patentanspruch 1, **gekennzeichnet dadurch, dass** die besagten Spannmittel einen kurvenförmigen Zugbogen (1) umfassen, der dazu imstande ist, die Ausdehnung der spannungsentlasteten Folie (3) zu fördern, sodass sie eine größere Höhe (H') annimmt.

3. Die Vorrichtung nach Patentanspruch 1, **gekennzeichnet dadurch, dass** die Oberflächen (1a, 2a) der Rollen (1, 2) abwechselnde Kämme (5) und Rinnen (6) umfassen, sodass ein Verlaufweg der Folie (3) definiert wird, der in der vertikalen Richtung nicht linear ist.

4. Die Vorrichtung nach Patentanspruch 3, **gekennzeichnet dadurch, dass** sich die Kämme (5) einer Rolle (1) gegenüber den Rinnen (6) der anderen Rolle (2) befinden und umgekehrt.

5. Die Vorrichtung nach Patentanspruch 1, **gekennzeichnet dadurch, dass** sie eine Mehrzahl an Rollen (1, 2) umfasst, die dazu imstande sind, die Spannungsentlastung der Folie (3) in verschiedene Phasen aufzuteilen.

## Revendications

1. Un dispositif pour étirer dans la direction verticale un film plastique dans des machines à emballer des charges palettisées, comprenant en série au moins deux rouleaux (1, 2) présentant des surfaces (1a, 2a) profilées de façon complémentaire et servant à détensionner le film plastique (3) en le faisant passer à travers une section présentant une mesure (M) supérieure à sa hauteur (H), et des moyens d'étirage (4) ayant une extension (S) supérieure à la hauteur (H) du film (3) et servant à rendre la déformation du film (3) permanente quand ledit film (3) passe sur lesdits moyens d'étirage (4), et comprenant une unité (7) servant à étirer le film plastique (3) dans la direction horizontale, où ladite unité (7) comprend au moins deux rouleaux (8, 9) dont le deuxième rouleau (9) tourne plus vite que le premier rouleau (8) de manière à étirer le film (3) dans la direction horizontale, le dispositif étant **caractérisé en ce que** les rouleaux (1, 2) présentant des surfaces (1a, 2a) profilées de façon complémentaire comprennent une portion de surface (12) en renfoncement de forme généralement cylindrique, ladite portion de surface (12) en renfoncement comprenant un renfoncement circonférentiel (13) destiné à servir de surface de réception pour l'insertion du film plastique (3) entre lesdits rouleaux (1, 2).

2. Le dispositif selon la revendication 1, **caractérisé en ce que** lesdits moyens d'étirage comprennent un arc d'étirage (4) incurvé destiné à favoriser l'extension du film (3) détensionné pour lui faire atteindre une plus grande hauteur (H').

3. Le dispositif selon la revendication 1, **caractérisé en ce que** les surfaces (1a, 2a) des rouleaux (1, 2) comprennent des crêtes (5) et des gorges (6) de manière à définir un parcours de progression du film (3) qui n'est pas linéaire dans la direction verticale.

4. Le dispositif selon la revendication 3, **caractérisé en ce que** les crêtes (5) d'un rouleau (1) sont face aux gorges (6) de l'autre rouleau (2), et inversement.

5. Le dispositif selon la revendication 1, **caractérisé en ce qu'**il comprend une pluralité de rouleaux (1, 2) servant à fractionner en plusieurs stades le détensionnement du film (3).
